# EUROPEAN PATENT SPECIFICATION

(11) **EP 3 258 175 B1**
(45) Date of publication and mention of the grant of the patent: **18.09.2019**
(21) Application number: 17173331.4
(22) Date of filing: 30.05.2017
(51) Int. Cl.: F24C 3/12, F24C 7/08, H05B 6/06

(54) **COOKING SUPPORT METHOD AND COOKING SUPPORT SYSTEM**
KOCHHILFEVERFAHREN UND KOCHHILFESYSTEM
PROCÉDÉ D'AIDE À LA CUISSON ET SYSTÈME D'AIDE À LA CUISSON

(30) Priority: 15.06.2016 JP 2016119305
(43) Date of publication of application: 20.12.2017
(73) Proprietor: Panasonic Intellectual Property Management Co., Ltd., Osaka-shi, Osaka 540-6207 (JP)
(72) Inventor: RAFII, Zarina, Osaka-shi, Osaka 540-6207 (JP); YUKI, Yasuhiro, Osaka-shi, Osaka 540-6207 (JP); KAMEI, Rinako, Osaka-shi, Osaka 540-6207 (JP); ASO, Mitsuhiro, Osaka-shi, Osaka 540-6207 (JP); SUGIMOTO, Hiroko, Osaka-shi, Osaka 540-6207 (JP)
(74) Representative: Grünecker Patent- und Rechtsanwälte PartG mbB

(56) References cited:
- CH-A2- 707 522
- JP-A- 2003 279 049
- JP-A- 2007 303 804
- KR-A- 20100 010 248
- US-A1- 2011 134 413
- US-A1- 2011 253 693

## Description

### BACKGROUND

### 1. Technical Field

The present disclosure relates to a cooking support method and a cooking support system.

### 2. Description of the Related Art

There has been proposed a method of detecting boiling over of a content from cookware such as a pot. For example, there has been disclosed a method of equipping a weight detector to an electromagnetic cooking heater, also called an induction heating (IH) cooking heater, which operates only with electricity without using gas or fire, and detecting boiling over from a cookware heated by the electromagnetic cooking heater based on the position of the center of gravity of and a change in weight of the cookware.

However, the above conventional technique has a problem that such boiling over from the cookware cannot be dealt with only after the actual occurrence thereof. Therefore, it is troublesome to wipe off and clean up the content and the like which have boiled over onto the electromagnetic cooking heater.

US 2011/134413 A1 relates to a monitoring unit that monitors the cooking area of a hob. The monitoring unit comprises a sensor array of multiple infrared sensors, which, advantageously, are arranged two-dimensionally and an extended field of vision in order to check whether the cooking is under supervision of a user. The data recorded by the sensor unit, such as a chronological sequence of images of the cooking area, is evaluated by an evaluation unit. More specifically, it determines the dimensions and/or contour of objects by means of image evaluation and recognizes an application situation based on a change in the contour. In particular, the evaluation unit may distinguish between normal heating, unintentional (triggering shutdown or reduced heating power), and a potentially unintentional application situation in the presence of an operator (triggering confirmation process). Alternatively, the temperature characteristics at lids or the surface of the food can be monitored for crossing a certain temperature threshold. Supposedly, overcooking can be prevented at least to some extent.

KR 2010 0010248 A relates to a cooking support system comprising a sensor unit that measures the temperature. If the temperature of the cooking material is higher than a preset temperature a controller reduces the output of the heating and the temperature of US 2011/0253693 A1 relates to a system for monitoring and controlling a cooking environment. Paragraph [34] discloses a portable multifunction computing and communication device as the control device of the system. According to paragraph [35], the portable multifunction computing and communication device may use any necessary or suitable communication protocol or standard, such as email protocol.

Document JP 2003 279049 A discloses a further cooking support method and system that uses radio waves to detect boiling over of a cookware.

### SUMMARY

The invention is defined by the features of the independent claims.

These general and specific aspects may be implemented using a system, a method, and a computer program, and any combination of systems, methods, and computer programs.

According to the present disclosure, a cooking support method and a cooking support system can be provided, which can prevent boiling over from cookware by detecting occurrence thereof beforehand.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a conceptual diagram showing an example of an overall configuration of Embodiment 1;
Fig. 2 is a conceptual diagram showing a positional relationship between a thermal image camera and a cookware shown in Fig. 1;
Fig. 3 is a block diagram showing a configuration example of a cooking support system according to Embodiment 1;
Fig. 4 is a flowchart showing an example of operations of the cooking support system according to Embodiment 1;
Fig. 5 is a flowchart showing an example of specific operations of S3 in Fig. 4;
Fig. 6 is a flowchart showing an example of specific operations of S5 in Fig. 4;
Fig. 7 is a diagram showing an example of a hot portion in the cookware according to Embodiment 1;
Fig. 8A is a diagram showing an example of a hot portion in a cookware according to a comparative example;
Fig. 8B is a diagram showing an example of the hot portion in the cookware according to the comparative example;
Fig. 9 is a block diagram showing a configuration example of a cooking support system according to Embodiment 2;
Fig. 10 is a block diagram showing a configuration example of the cooking support system according to Embodiment 2;
Fig. 11 is a flowchart showing an example of operations of the cooking support system according to Embodiment 2;
Fig. 12 is a flowchart showing an example of specific operations of S4 in Fig. 11;
Fig. 13 is a flowchart showing an example of specific operations of S5A in Fig. 11;
Fig. 14 is a thermal image showing an example of how boiling over occurs when the cookware has a lid on in Embodiment 2;
Fig. 15 is a thermal image showing an example of how boiling over occurs when the cookware has a lid on in Embodiment 2;
Fig. 16 is a block diagram showing a configuration example of a cooking support system according to Embodiment 3;
Fig. 17 is a flowchart showing an example of operations of the cooking support system according to Embodiment 3;
Fig. 18 is a flowchart showing an example of specific operations of S12 in Fig. 17;
Fig. 19 is a diagram for explaining a region-by-region thermal image generated in S12in Fig. 17;
Fig. 20 is a flowchart showing an example of specific operations of S2B in Fig. 17; and
Fig. 21 is a flowchart showing an example of specific operations of S3B in Fig. 17.

### DETAILED DESCRIPTION

### (Underlying Knowledge Forming Basis of the Present Disclosure)

There has been proposed a method of detecting boiling over of a content from a cookware such as a pot (see, for example, Japanese Unexamined Patent Application Publication No. 2013-72637 (JP2013-72637A)).

JP2013-72637A discloses a method of equipping a weight detector to an electromagnetic cooking heater which operates only with electricity without using gas or fire, and detecting boiling over from a cookware heated by the electromagnetic cooking heater based on the position of the center of gravity of and a change in weight of the cookware.

However, the technique disclosed in JP2013-72637A has a problem that such boiling over from the cookware cannot be dealt with only after the actual occurrence thereof. Therefore, it is troublesome to wipe off and clean up the content and the like which have boiled over onto the electromagnetic cooking heater.

Meanwhile, Japanese Unexamined Patent Application Publication No. 2007-303804 (JP2007-303804A) discloses, for example, a method of using an infrared sensor to detect the temperature of a cookware, and thereby detecting boiling over from a cookware heated by an electromagnetic cooking heater before the occurrence thereof.

However, the technique disclosed in JP2007-303804A has a problem that only surface temperature information on one side of the cookware can be acquired due to a positional relationship between the installation position of the infrared sensor and the position where the cookware is placed. Therefore, if the cookware is a stainless steel pot, temperature information on the content cannot be acquired with the infrared sensor. Moreover, the technique disclosed in JP2007-303804A also has a problem that, since a sensor to detect the cookware is installed in addition to the infrared sensor to detect the temperature of the cookware, it is difficult to install and set these sensors and thus introduction thereof is not realistic.

In consideration of the above problems, the inventors have conceived the aspects disclosed below.
(1) A cooking support method according to aspect of the present disclosure provides a cooking support method for a cooking support system which is connected through a network to a thermal image camera to take a thermal image of a region including a cookware during cooking and to a notification device capable of notifying the user of information, and which supports cooking by a user, including: acquiring, through the network from the thermal image camera, a thermal image of the region including the cookware at predetermined time intervals taken from the obliquely above the cookware by the thermal image camera; calculating a value indicating a change in level of a content in the cookware from the acquired thermal image; determining whether or not the calculated value indicating the change in level is not less than a predetermined threshold; determining that there is a possibility of the content boiling over the cookware during cooking when it is determined that the calculated value indicating the change in level is not less than the predetermined threshold; and transmitting notification information to the notification device, the notification information indicating information notifying the user that there is the possibility of boiling over.
   According to this aspect, a cooking support method and a cooking support system can be provided, which can prevent boiling over from cookware by detecting occurrence thereof beforehand.
(2) In the described-above aspect, the cooking support system may be further connected through the network to a cooking heater that enables cooking with the cookware, the cooking support method may further include transmitting a control signal indicating an instruction to lower an output of the cooking heater to the cooking heater when it is determined that the calculated value indicating the change in level is not less than the predetermined threshold.
(3) In the described-above aspect, the control signal may indicate an instruction to stop a cooking operation by the cooking heater.
(4) In the described-above aspect, the cooking support method may further include calculating a value indicating a change in area of a predetermined temperature region that is a region having a predetermined temperature or higher in the thermal image of the cookware acquired at the predetermined time intervals, as the value indicating the change in level.
(5) In the described-above aspect, the cooking support method may further include determining whether or not there is a lid on the cookware during cooking based on the thermal image; when it is determined that there is no lid, determining whether or not the value indicating the change in level is not less than the predetermined threshold; and when it is determined that there is the lid, detecting an outside edge of the lid of the cookware based on the thermal image, calculating a value of a temperature change in the outside edge as the value indicating the change in level, and determining whether or not the value of the temperature change in the outside edge is not less than a predetermined threshold.
(6) In the described-above aspect, the cooking support method may further include calculating a value indicating a change in area of a region having a predetermined temperature or higher at and around the outside edge in the thermal image of the cookware at the predetermined time intervals, as the value of the temperature change in the outside edge.
(7) In the described-above aspect, the cooking support method may further include checking if the region of the acquired thermal image includes a human temperature region that is a temperature region indicating a human in a background region other than a cookware region that is a specific region including the cookware; and resetting the value indicating the change in level when it is confirmed that there is the human temperature region in the background region
(8) In the described-above aspect, the notification device may be portable by the user and includes a display viewable by the user, and the cooking support method may further include transmitting the notification information through an e-mail to the notification device when it is determined that the calculated value indicating the change in level is not less than the predetermined threshold.
(9) A cooking support method according to aspect of the present disclosure provides a cooking support system which is connected through a network to a thermal image camera to take a thermal image of a region including a cookware during cooking and to a notification device capable of notifying the user of information, and which supports cooking by a user, including: a data acquirer that acquires, through the network from the thermal image camera, a thermal image of the region including the cookware at predetermined time intervals taken from the obliquely above the cookware by the thermal image camera; a change calculator that calculates a value indicating a change in level of a content in the cookware from the acquired thermal image; a boil-over determiner that determines whether or not the calculated value indicating the change in level is not less than a predetermined threshold, and determines that there is a possibility of the content boiling over the cookware during cooking when it is determined that the calculated value indicating the change in level is not less than the predetermined threshold; and a notifier that transmits notification information indicating information notifying the user that there is a possibility of boiling over to the notification device when the boil-over determiner determines that there is the possibility of the content boiling over.

It should be noted that general or specific embodiments may be implemented as a system, a method, an integrated circuit, a computer program, or a computer-readable recording medium such as a CD-ROM, and may be realized by any combination of a system, a method, an integrated circuit, a computer program, and a recording medium.

With reference to the drawings, specific description is given below of a cooking support method and the like according to one embodiment of the present disclosure. Note that embodiments described below are all specific examples of the present disclosure. Values, shapes, materials, components, placements of components, and the like described in the following embodiments are only exemplary. Components in the following embodiments which are not included in an independent claim indicating the highest concept are described as being optional components.

### (Embodiment 1)

### [Overall Configuration]

With reference to the drawings, a cooking support system according to Embodiment 1 is described below.

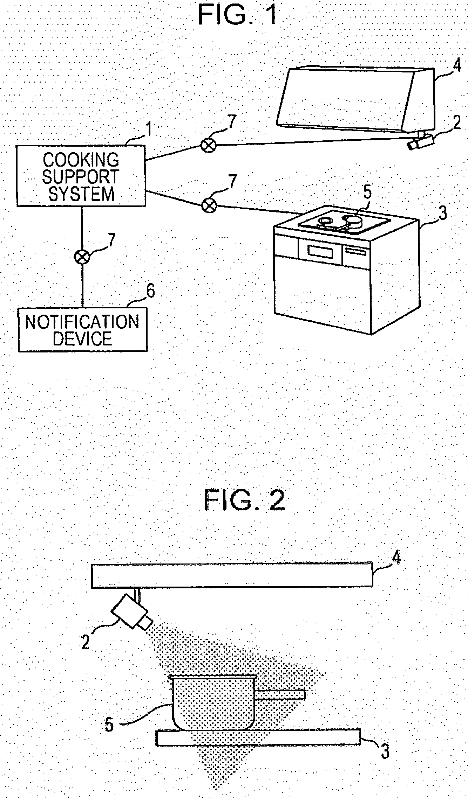

Fig. 1 is a conceptual diagram showing an example of an overall configuration of Embodiment 1. Fig. 2 is a conceptual diagram showing a positional relationship between a thermal image camera 2 and a cookware 5 shown in Fig. 1.

A cooking support system 1 is connected to the thermal image camera 2, a cooking heater 3, and a notification device 6 through a network 7 as shown in Fig. 1, and supports cooking by a user with the cookware 5.

The cooking heater 3 is a device that enables cooking with the cookware 5. The cooking heater 3 is, for example, an IH cooking heater that cooks the content in the cookware 5 by operating only with electricity, without using gas or fire, to heat the cookware 5. Note that the cooking heater 3 is not limited to the IH cooking heater but may also be a cooking heater that performs cooking with the cookware 5 by using gas or fire if the cooking heater can stop cooking according to a control signal from the cooking support system 1 as described later.

The cookware 5 is, for example, a pot or the like, having its content cooked by the cooking heater 3.

The thermal image camera 2 is installed to be able to take a thermal image from obliquely above the cookware 5, and takes a thermal image of a region including the cookware 5 during cooking of the content. In this embodiment, the thermal image camera 2 is attached to a kitchen stove hood 4 or the like, for example, above the cooking heater 3 as shown in Fig. 2, and thus installed to be able to take a thermal image from obliquely above the cookware 5. Also, the thermal image camera 2 takes a thermal image of the region including the cookware 5 at predetermined time intervals.

The notification device 6 is a device capable of notifying the user of information. In this embodiment, the notification device 6 is a portable device that can be carried by the user and includes a display viewable by the user, such as a smartphone and a cell-phone, for example. Note that the notification device 6 is not limited to such a device that can be carried by the user and includes the display viewable by the user, but may also be a sound generator capable of notifying the user of information such as an alert by generating a sound.

The network 7 is a network such as a wireless communication network such as Bluetooth (registered trademark) and Wi-Fi or a wireless or wired LAN.

### [Configuration of Cooking Support System 1]

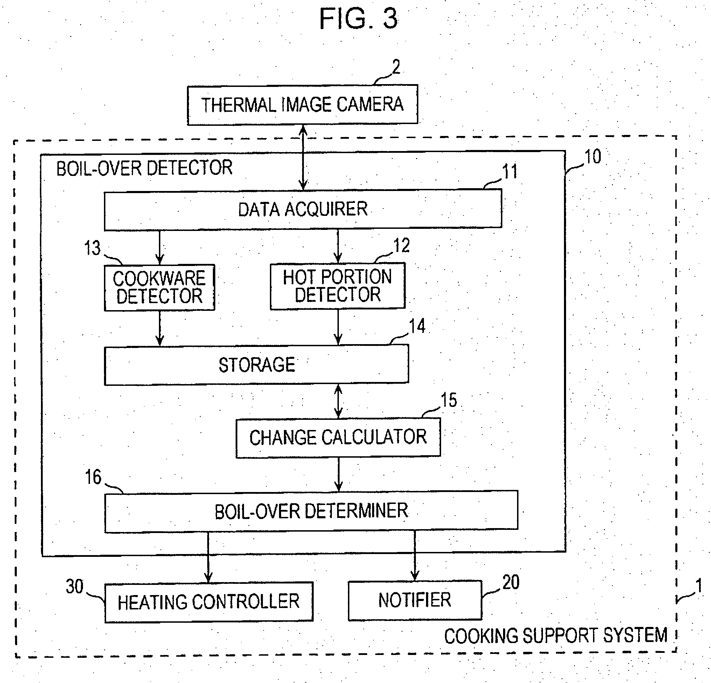

Fig. 3 is a block diagram showing a configuration example of the cooking support system 1 according to this embodiment.

As shown in Fig. 3, the cooking support system 1 includes a boil-over detector 10, a notifier 20, and a heating controller 30.

When the boil-over detector 10 detects the possibility of boiling over (occurrence of boiling over), the notifier 20 transmits notification information indicating information notifying the user of the possibility of boiling over. In this embodiment, for example, the notifier 20 transmits the notification information indicating the possibility of boiling over through e-mail, for example, to the notification device 6.

When the boil-over detector 10 detects the possibility of occurrence of boiling over, the heating controller 30 transmits a control signal indicating an instruction to lower the output of the cooking heater 3 to the cooking heater 3. Here, the control signal may indicate an instruction to stop a heating operation by the cooking heater, for example.

### [Configuration of Boil-Over Detector 10]

As shown in Fig. 3, the boil-over detector 10 includes a data acquirer 11, a hot portion detector 12, a cookware detector 13, a storage 14, a change calculator 15, and a boil-over determiner 16. The boil-over detector 10 detects the possibility of the content boiling over the cookware 5 based on the thermal image acquired from the thermal image camera 2.

The data acquirer 11 acquires the thermal image of the region including the cookware 5 at predetermined time intervals from the thermal image camera 2.

The cookware detector 13 detects whether or not there is the cookware 5, based on the thermal image acquired by the data acquirer 11. In this embodiment, the cookware detector 13 performs image processing of binarizing and smoothing the thermal image acquired by the data acquirer 11 and then performs detection processing of detecting an edge of the cookware 5 in the thermal image subjected to the image processing, thereby detecting whether or not there is the cookware 5. When having succeeded in the detection processing, the cookware detector 13 stores positional information on the cookware 5 in the thermal image acquired by the data acquirer 11 and temperature information that can be acquired from the thermal image of the cookware 5 in the storage 14.

The hot portion detector 12 detects a hot portion of the cookware 5 from the thermal image acquired by the data acquirer 11. In this embodiment, the hot portion detector 12 detects a hot region having 70°C or higher, for example, in the thermal image acquired by the data acquirer 11, and stores the detected hot region as temperature information in the storage 14.

The storage 14 includes, for example, an SD card or a flash memory, and stores the temperature information (thermal image of the hot region) described above and positional information on the cookware 5 in the thermal image acquired by the data acquirer 11.

The change calculator 15 calculates a value indicating a change in level of the content in the cookware 5 from the thermal image acquired by the data acquirer 11. Here, as the value indicating a change in level, for example, the change calculator 15 calculates a value indicating a change in area of a predetermined temperature region that is a region having a predetermined temperature or higher in the thermal image of the cookware 5 acquired at predetermined time intervals. In this embodiment, the change calculator 15 detects the content level in the cookware 5 from the hot region having 70°C or higher, for example, in the cookware 5 within the thermal image detected by the cookware detector 13. Then, the change calculator 15 calculates a difference distance between the detected content level (upper edge of the hot region) in the cookware 5 and the edge (upper edge) of the cookware 5 detected by the cookware detector 13. The change calculator 15 stores information (upper edge of the hot region) indicating the detected content level and the calculated difference distance in the storage 14. When information indicating the content level detected a predetermined time ago is stored in the storage 14, the change calculator 15 calculates an increase in the detected content level. Here, as the increase in content level, the change calculator 15 calculates an increase indicating a change in area of the hot region that is a region having 70°Cor higher, for example, in the thermal image of the cookware 5 acquired at predetermined time intervals.

Note that, as the value indicating a change in content level in the cookware 5, the change calculator 15 may also calculate a ratio of the hot region of the thermal image indicating the content in the cookware 5 to the region of the thermal image indicating the cookware 5.

The boil-over determiner 16 determines whether or not the value indicating a change in level calculated by the change calculator 15 is not less than a predetermined threshold. When determining that the value indicating a change in level calculated by the change calculator 15 is not less than the predetermined threshold, the boil-over determiner 16 determines that there is the possibility of the content boiling over the cookware 5 during cooking. In this embodiment, the boil-over determiner 16 determines whether or not the increase calculated by the change calculator 15 is not less than a predetermined threshold (hereinafter referred to as the first threshold). When determining that the increase calculated by the change calculator 15 is not less than the first threshold, the boil-over determiner 16 determines that there is the possibility of the content boiling over the cookware 5 during cooking.

Note that, when determining that the increase calculated by the change calculator 15 is not less than the first threshold, the boil-over determiner 16 may further determine whether or not the calculated increase is not less than a second threshold. When determining that the calculated increase is not less than the second threshold, the boil-over determiner 16 may determine boil-over occurrence, meaning that the content is to actually boil over the cookware 5 during cooking within a few seconds, for example. On the other hand, when determining that the calculated increase is less than the second threshold, the boil-over determiner 16 may determine boil-over anticipation, meaning that there is the possibility of the content boiling over the cookware 5 during cooking within several ten seconds to several minutes, for example.

Note that, as described above, the change calculator 15 may calculate the ratio of the hot region of the thermal image indicating the content in the cookware 5 to the region of the thermal image indicating the cookware 5, as the value indicating a change in content level in the cookware 5. In this case, the boil-over determiner 16 may determine the boil-over anticipation, when the hot region of the thermal image indicating the content in the cookware 5 during cooking is 50% to 80% of the region of the thermal image indicating the cookware 5. Also, the boil-over determiner 16 may determine the boil-over occurrence, when the hot region of the thermal image indicating the content in the cookware 5 during cooking exceeds 80% of the region of the thermal image indicating the cookware 5.

### [Operations of Cooking Support System 1]

Next, description is given of operations of the cooking support system 1 configured as described above.

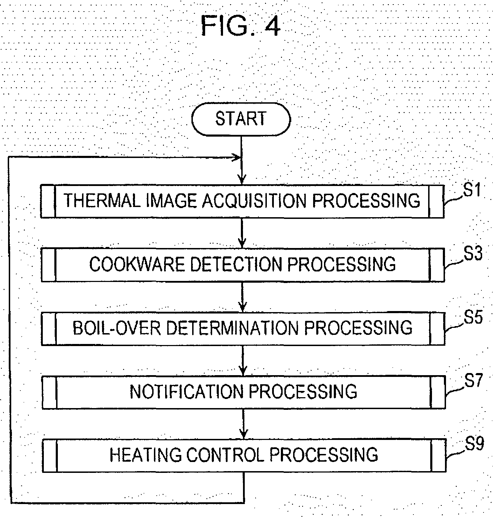

Fig. 4 is a flowchart showing an example of operations of the cooking support system 1 according to Embodiment 1.

First, the cooking support system 1 performs thermal image acquisition processing to acquire a thermal image of a region including the cookware 5 at the predetermined time intervals from the thermal image camera 2 through the network 7 (S1).

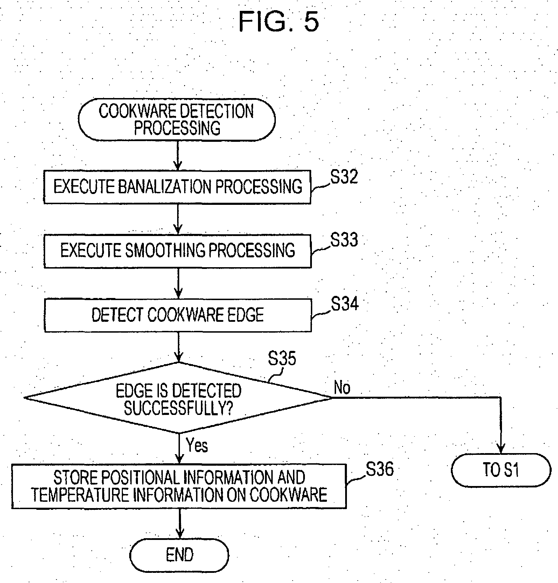

Next, the cooking support system 1 performs cookware detection processing to detect the cookware 5 based on the thermal image acquired in S1 (S3). Here, with reference to Fig. 5, the cookware detection processing is described in detail. Fig. 5 is a flowchart showing an example of specific operations of S3 in Fig. 4.

As shown in Fig. 5, the cooking support system 1 first performs binarization processing on the acquired thermal image (S32) and then performs smoothing processing (S33). Note that the image processing such as the binarization processing and the smoothing processing is the known processing, and thus description thereof is omitted here. Next, the cooking support system 1 performs detection processing to detect the edge of the cookware 5 in the thermal image subjected to the image processing in S32 and S33 (S34). Here, if the cookware 5 is a pot, for example, the edge thereof is circular, for example. More specifically, the edge of the cookware 5 can be detected based on edge characteristics of the cookware 5, such as circular, oval, and linear. Note that, even if there is more than one cookware 5, the edges thereof can be detected based on their respective edge characteristics. Then, when having succeeded in the edge detection processing on the cookware 5 (Yes in S35), the cooking support system 1 stores positional information in the acquired thermal image on the cookware 5 (concerned cookware 5) whose edge has been successfully detected as well as temperature information that can be acquired from the thermal image of the concerned cookware 5 in the storage 14 (S36). Here, the temperature information stored in the storage 14 may be a thermal image at a position corresponding to the concerned cookware 5. Note that, when having failed in the edge detection processing on the cookware 5 (No in S35), the cooking support system 1 returns to S1 to start over from the thermal image acquisition processing.

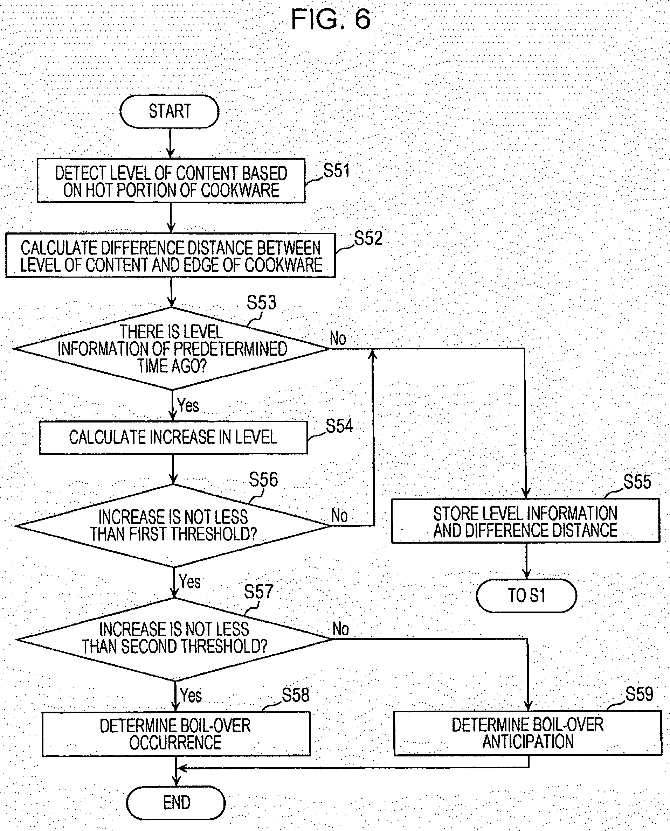

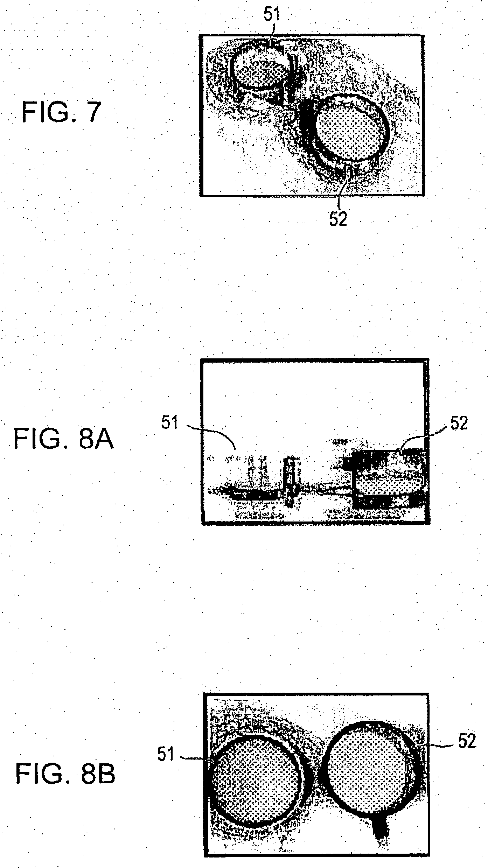

Next, the cooking support system 1 performs boil-over determination processing (S5). Here, with reference to Fig. 6, the boil-over determination processing is described in detail. Fig. 6 is a flowchart showing an example of specific operations of S5 in Fig. 4. Fig. 7 is a diagram showing an example of hot portions in cookwares according to Embodiment 1. Figs. 8A and 8B are diagrams showing an example of hot portions in cookwares according to a comparative example. In Figs. 7 to 8B, a cookware 51 and a cookware 52 are each an example of the cookware 5, and represent a stainless steel pot and an enamel pot, respectively.

As shown in Fig. 6, the cooking support system 1 first detects the level of the content from the hot portion in the cookware 5, based on the thermal image acquired in S1 (S51). As shown in Fig. 7, for example, the cooking support system 1 can detect the levels of the contents in the cookwares 51 and 52 from the hot regions (hatched portions in Fig. 7) of 70°C or higher, for example, in the cookwares 51 and 52 (in the pots) within the thermal image detected in S3. The thermal image camera 2 is installed to be able to take a thermal image from obliquely above the cookwares 51 and 52, and takes a thermal image of the region including the cookwares 51 and 52 during cooking. Therefore, the levels of the contents in the cookwares 51 and 52 can be detected from the peripheries of the hot regions of 70°C or higher. On the other hand, in a thermal image of the comparative example taken from the side of the cookwares 51 and 52 as shown in Fig. 8A, for example, the hot region (hatched portion in Fig. 8A) of 70°C or higher can be recognized from the cookware 52 that is the enamel pot, and thus the content level can be detected. However, since no hot region having 70°C or higher can be recognized from the cookware 51 that is the stainless steel pot, and thus the content level cannot be detected. On the other hand, in a thermal image of the comparative example taken from above the cookwares 51 and 52 as shown in Fig. 8B, for example, the hot regions (hatched portions in Fig. 8B) of 70°C or higher can be recognized from the cookwares 51 and 52. However, there is no difference in height between the peripheries of the hot regions and the edges of the cookwares 51 and 52. Therefore, the content levels thereof cannot be accurately detected.

Next, the cooking support system 1 calculates a difference distance between the content level in the cookware 5 detected in S51 and the edge (upper edge) of the cookware 5 (S52). In this embodiment, the cooking support system 1 calculates a difference distance between the periphery of the hot region having 70°C or higher indicating the content level in the cookware 5 detected in S51 and the edge of the cookware 5 indicated by the positional information on the cookware 5 detected in S3 and stored in the storage 14.

Then, the cooking support system 1 checks if information indicating the content level detected a predetermined time ago is stored in the storage 14 (S53). Here, the information indicating the content level detected a predetermined time ago is, for example, a thermal image indicating the periphery of the hot region having 70°C or higher. Note that, when it is confirmed that the information indicating the content level detected a predetermined time ago is not stored in the storage 14 (No in S53), the cooking support system 1 stores the information indicating the content level detected in S51 and the difference distance calculated in S52 in the storage 14 (S55).

On the other hand, when it is confirmed in S53 that the information indicating the content level detected a predetermined time ago is stored in the storage 14 (Yes in S53), the cooking support system 1 calculates an increase in the content level detected in S51 (S54). Here, the increase in the content level detected in S51 corresponds to a value indicating a change in the content level in the cookware 5, and is calculated from an increase indicating a change in area of the hot region having 70°C or higher, for example, in each of the thermal images of the cookware 5 acquired at the predetermined time intervals.

Thereafter, the cooking support system 1 determines whether or not the increase calculated in S54 is not less than a first threshold (predetermined threshold) (S56). Note that, when the increase calculated in S54 is less than the first threshold (No in S56), the cooking support system 1 moves to S55 to store the information indicating the content level detected in S51 and the difference distance calculated in S52 in the storage 14.

On the other hand, when it is determined in S56 that the increase calculated in S54 is not less than the first threshold (Yes in S56), the cooking support system 1 determines that there is the possibility of the content boiling over the cookware 5 during cooking, and further determines whether or not the increase calculated in S54 is not less than a second threshold (S57).

When it is determined that the increase calculated in S54 is not less than the second threshold (Yes in S57), the cooking support system 1 determines boil-over occurrence (S58). Here, as described above, the boil-over occurrence means that the content is to boil over the cookware 5 during cooking within a few seconds, for example. On the other hand, when it is determined that the increase calculated in S54 is less than the second threshold (No in S57), the cooking support system 1 determines boil-over anticipation (S59). Note that the boil-over anticipation means that there is a risk (possibility) of the content boiling over the cookware 5 during cooking within several ten seconds to several minutes, for example.

Hereinafter, further description is given referring back to Fig. 4.

Next, when it is determined in S5 that there is the possibility of boiling over, the cooking support system 1 performs notification processing to transmit notification information indicating information notifying the user of the possibility of boiling over to the notification device 6 (S7).

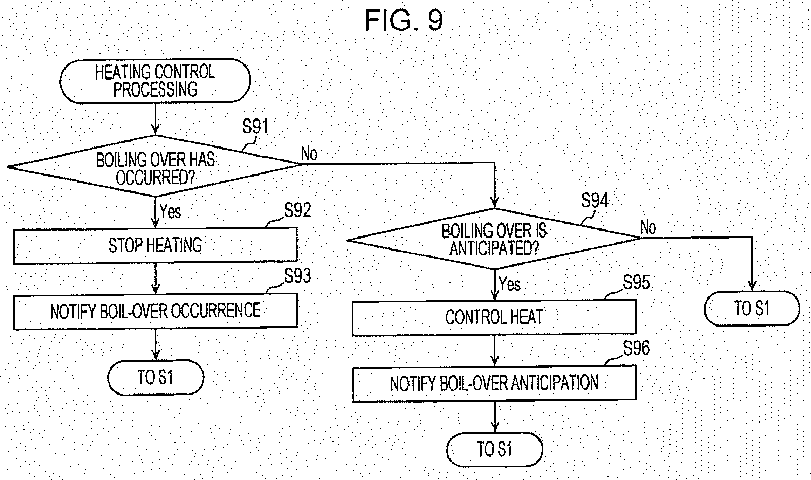

Then, when it is determined in S5 that there is the possibility of boiling over, the cooking support system 1 performs heating control processing to transmit a control signal indicating an instruction to lower the output of the cooking heater 3 to the cooking heater 3 (S9). Here, with reference to Fig. 9, the heating control processing is described in detail. Fig. 9 is a flowchart showing an example of specific operations of S9 in Fig. 4.

As shown in Fig. 9, the cooking support system 1 first checks if the boil-over occurrence has been determined in the boil-over determination processing in S5 (S91).

When it is confirmed in S91 that the boil-over occurrence has been determined (Yes in S91), the cooking support system 1 stops the heating operation by the cooking heater 3 (S92) and notifies the user of the cooking heater 3 that boiling over will occur (S93). In this embodiment, the cooking support system 1 transmits a control signal indicating an instruction to stop the heating operation by the cooking heater 3 to the cooking heater 3, thereby stopping the heating operation by the cooking heater 3. Also, the cooking support system 1 notifies the user that boiling over will occur by transmitting notification information indicating information notifying the user that boiling over will occur to the notification device 6. Note that the cooking support system 1 may perform either S92 or S93 first.

On the other hand, when it is confirmed in S91 that the boil-over occurrence has not been determined (No in S91), the cooking support system 1 checks if the boil-over anticipation has been determined in the boil-over determination processing in S5 (S94). When it is confirmed in S94 that the boil-over anticipation has been determined (Yes in S94), the cooking support system 1 controls the heat of the cooking heater 3 (S95) and notifies the user of the cooking heater 3 of the boil-over anticipation (S96). In this embodiment, the cooking support system 1 transmits a control signal indicating an instruction to lower the output of the cooking heater 3, thereby controlling the heat of the cooking heater 3. Also, the cooking support system 1 transmits notification information indicating information notifying the user of the boil-over anticipation to the notification device 6, thereby notifying the user of the boil-over anticipation. Note that the cooking support system 1 may perform either S95 or S96 first. On the other hand, when it is confirmed in S94 that the boil-over anticipation has not been determined (No in S94), the cooking support system 1 moves to S1 to start over from the thermal image acquisition processing.

### [Advantageous Effects and the Like of Embodiment 1]

As described above, the cooking support system and the cooking support method according to this embodiment can prevent the content in the cookware 5 from boiling over by detecting occurrence thereof beforehand, regardless of the material of the cookware 5, with the thermal image taken from obliquely above the cookware 5.

When the thermal image taken from the side of the cookware 5 is used, for example, as the comparative example, no temperature information can be acquired from the thermal image if the cookware 5 has low thermal conductivity, such as a stainless steel pot. Therefore, the content level cannot be detected, and thus boil-over determination cannot be made. Furthermore, when multiple cookwares 5 are arranged in parallel when seen from the thermal image camera 2, even if the cookwares 5 have high thermal conductivity, such as an enamel pot, temperature information on the respective cookwares 5 cannot be acquired from the thermal image, and thus the content levels cannot be detected.

Alternatively, when a thermal image taken from immediately above (above) the cookware 5 is used, for example, temperature information on the content can be detected even if the cookware 5 has low thermal conductivity, such as a stainless steel pot. However, in the early stage of shooting when the temperature of the content is low, it is difficult to distinguish the cooking heater 3 from the cookware 5 in the acquired thermal image. This reduces the accuracy of detecting the edge of the cookware 5. Therefore, temperature information on the content in the cookware 5 cannot be accurately acquired. Furthermore, when the thermal image taken from immediately above (above) the cookware 5 is used, it is difficult to distinguish the upper edge of the content from the edge of the cookware 5. Thus, the content level cannot be accurately detected from the thermal image. Therefore, when the thermal image taken from immediately above (above) the cookware 5 is used, accurate boil-over determination cannot be made.

On the other hand, the cooking support system and the cooking support method according to this embodiment make it easier to distinguish the upper edge of the content from the edge of the cookware 5, regardless of the material of the cookware 5, by use of the thermal image taken from obliquely above (oblique above angle) the cookware 5. Therefore, it is made easier to more accurately detect the content level, and to calculate a change in level (shift in level) of the content. Thus, accurate boil-over determination can be made. As a result, the content in the cookware 5 can be prevented from boiling over the cookware 5 by detecting occurrence thereof beforehand, regardless of the material of the cookware 5.

### (Embodiment 2)

In Embodiment 1, the description is given of the cooking support method and the cooking support system when the cookware 5 such as a pot is not covered, for example. However, the present disclosure is not limited thereto. In Embodiment 2, description is given of a cooking support method and a cooking support system considering a case where a cookware 5 is covered. In the following description, description of the same points as Embodiment 1 is omitted, and differences are mainly described.

### [Configuration of Cooking Support System 1A]

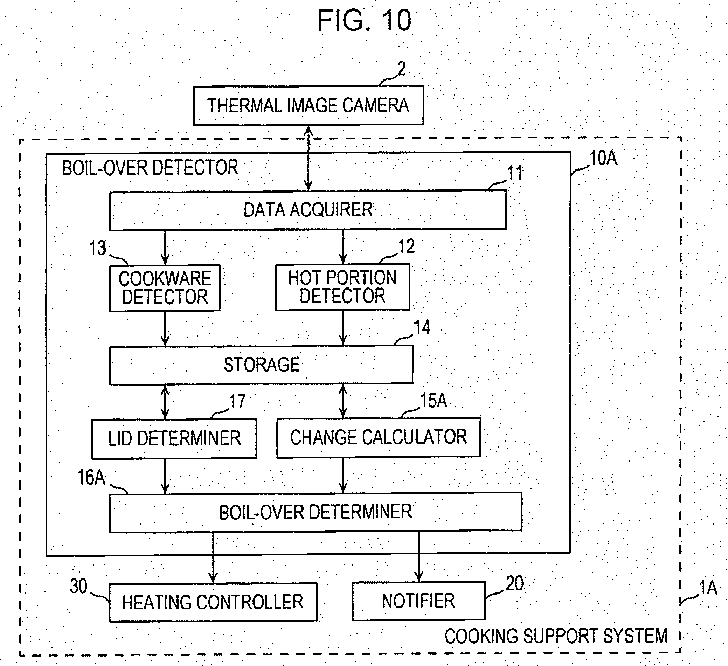

Fig. 10 is a block diagram showing a configuration example of a cooking support system 1A according to Embodiment 2. The same components as those shown in Fig. 3 are denoted by the same reference numerals, and detailed description thereof is omitted.

As shown in Fig. 10, the cooking support system 1A includes a boil-over detector 10A, a notifier 20, and a heating controller 30. The cooking support system 1A shown in Fig. 10 is different from the cooking support system 1 according to Embodiment 1 in the configuration of the boil-over detector 10A. The other configuration is the same as that of Embodiment 1, and thus description thereof is omitted here.

### [Configuration of Boil-Over Detector 10A]

As shown in Fig. 10, the boil-over detector 10A includes a data acquirer 11, a hot portion detector 12, a cookware detector 13, a storage 14, a change calculator 15A, a boil-over determiner 16A, and a lid determiner 17. The boil-over detector 10A detects the possibility of the content boiling over the cookware 5 based on a thermal image acquired from the thermal image camera 2. To be more specific, the boil-over detector 10A shown in Fig. 10 is obtained by adding the lid determiner 17 to the boil-over detector 10 in Embodiment 1, and is different from the boil-over detector 10 in configurations of the change calculator 15A and the boil-over determiner 16A.

The lid determiner 17 determines whether or not there is a lid on the cookware 5 during cooking, based on the thermal image. When determining that there is the lid on the cookware 5 during cooking, the lid determiner 17 further detects an outside edge of the lid of the cookware 5 based on the thermal image.

When the lid determiner 17 determines that there is the lid on the cookware 5 during cooking, the change calculator 15A calculates a value of a temperature change in the outside edge detected by the lid determiner 17, as a value indicating a change in content level in the cookware 5. Here, the change calculator 15A calculates a value indicating a change in area of a region having a predetermined temperature or higher at and around the outside edge in the thermal image of the cookware 5 acquired at the predetermined time intervals, as the value of a temperature change in the outside edge.

The boil-over determiner 16A determines whether or not the value indicating a change in level calculated by the change calculator 15A is not less than a predetermined threshold. To be more specific, when the lid determiner 17 determines that there is no lid on the cookware 5 during cooking, the boil-over determiner 16A determines whether or not the value of a temperature change in the outside edge calculated by the change calculator 15A is not less than a predetermined threshold (fourth threshold). When determining that the value of a temperature change in the outside edge calculated by the change calculator 15A is not less than the predetermined threshold (fourth threshold), the boil-over determiner 16A determines that there is the possibility of the content boiling over the cookware 5 during cooking.

### [Operations of Cooking Support System 1A]

Next, description is given of operations of the cooking support system 1A configured as described above.

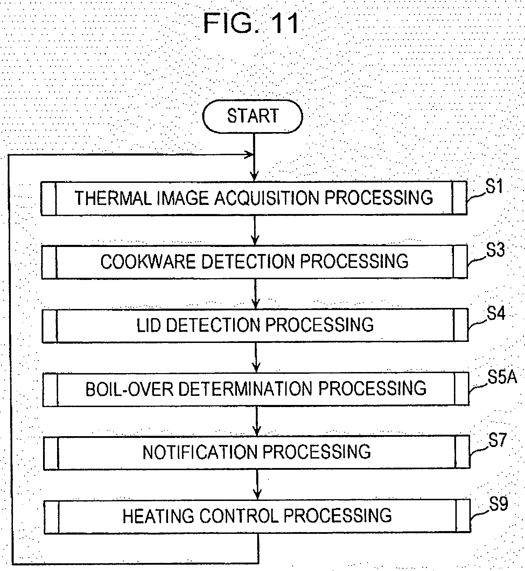

Fig. 11 is a flowchart showing an example of operations of the cooking support system 1A according to Embodiment 2. The same components as those shown in Fig. 4 are denoted by the same reference numerals, and detailed description thereof is omitted.

First, the cooking support system 1A performs thermal image acquisition processing to acquire a thermal image of a region including the cookware 5 at predetermined time intervals from the thermal image camera 2 through the network 7 (S1).

Next, the cooking support system 1A performs cookware detection processing to detect the cookware 5 based on the thermal image acquired in S1 (S3).

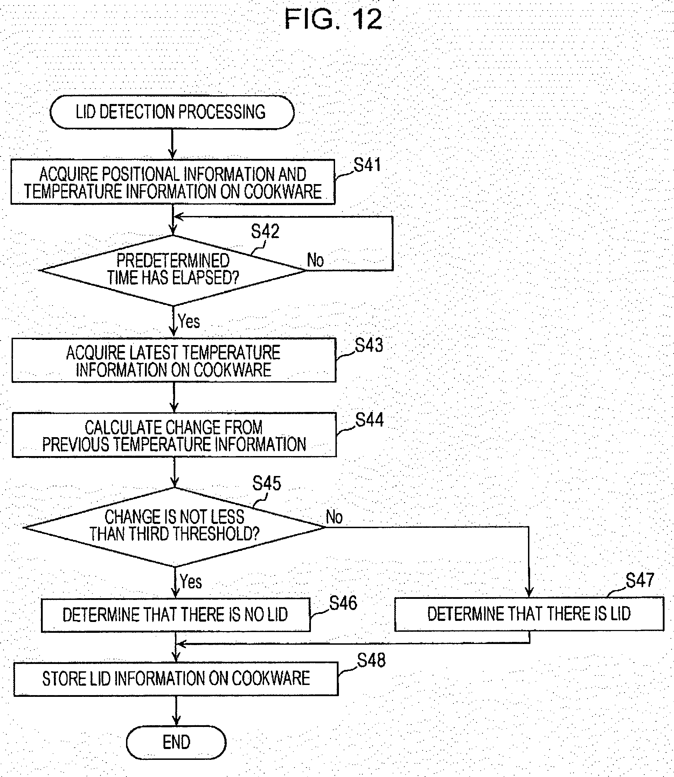

Then, the cooking support system 1A performs lid detection processing to detect a lid of the cookware 5 based on the thermal image acquired in S1 (S4). Here, with reference to Fig. 12, the lid detection processing is described in detail. Fig. 12 is a flowchart showing an example of specific operations of S4 in Fig. 11.

As shown in Fig. 12, the cooking support system 1A first acquires positional information and temperature information on the cookware 5 stored in S3 from the storage 14 (S41). Then, after the elapse of a predetermined time (Yes in S42), the cooking support system 1A acquires latest temperature information on the cookware 5 (S43). In this embodiment, the latest temperature information on the cookware 5 is a latest thermal image of a hot region detected by the hot portion detector 12 and stored in the storage 14. Thereafter, the cooking support system 1A calculates a change that is a difference between the previous temperature and the latest temperature (S44). To be more specific, the cooking support system 1A calculates a change that is a difference between the previous temperature information and the latest temperature information, from the thermal image (previous temperature information) of the hot region in the cookware 5 before the elapse of the predetermined time and the thermal image (latest temperature information) of the hot region in the cookware 5 after the elapse of the predetermined time, which are acquired in S41 and S43. Next, the cooking support system 1A determines whether or not the calculated change is not less than a threshold (third threshold) (S45).When determining in S45 that the change calculated in S44 is not less than the third threshold (Yes in S45), the cooking support system 1A makes lid-absent determination, i.e., determines that there is no lid on the cookware 5 (S46). On the other hand, when determining that the change calculated in S44 is less than the third threshold (No in S45), the cooking support system 1A makes lid-present determination, i.e., determines that there is the lid on the cookware 5 (S47). Lastly, the cooking support system 1A stores the determination result in S45, i.e., lid information on the cookware 5 in the storage 14 (S48).

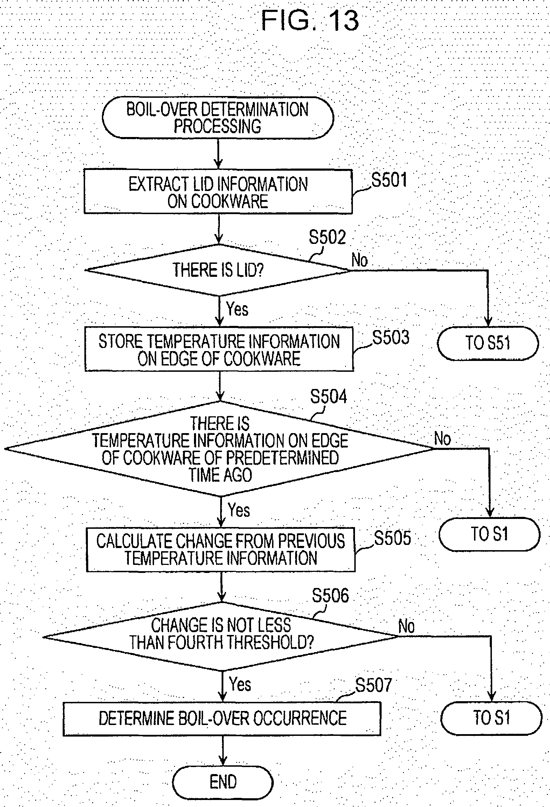

Then, the cooking support system 1A performs boil-over determination processing (S5A). Here, with reference to Fig. 13, the boil-over determination processing performed by the cooking support system 1A is described in detail. Fig. 13 is a flowchart showing an example of specific operations of S5A in Fig. 11.

As shown in Fig. 13, the cooking support system 1A first acquires the lid information on the cookware 5 stored in S4 from the storage 14 (S501) and determines whether or not there is a lid on the cookware 5 (S502).

When determining in S502 that there is no lid on the cookware 5 (No in S502), the cooking support system 1A moves to S51 shown in Fig. 6 and performs the boil-over determination processing described in S51 to S59 shown in Fig. 6.

On the other hand, when determining in S502 that there is the lid on the cookware 5 (Yes in S502), the cooking support system 1A stores edge temperature information on the cookware 5 in the storage 14 (S503). In this embodiment, the cooking support system 1A specifies the position of the edge (outside edge) of the cookware 5 in the thermal image, based on the positional information on the cookware 5 acquired from the storage 14. Then, the cooking support system 1A extracts temperature information (thermal image) at the position of the concerned edge of the cookware 5 from the temperature information (thermal image) acquired from the storage 14, and stores the extracted temperature information as temperature information (thermal image) of the edge of the cookware 5 in the storage 14. Note that the position of the concerned edge (outside edge) of the cookware 5 may be a position at and around the concerned edge, and may be a position at and outside or at and inside the concerned edge, or an outside position slightly away from the concerned edge.

Next, the cooking support system 1A checks if the edge temperature information of a predetermined time ago is stored in the storage 14 (S504). Note that, when it is confirmed in S504 that the edge temperature information of the predetermined time ago is not stored in the storage 14 (No in S504), the cooking support system 1A moves to S1 shown in Fig. 11 to start over from the thermal image acquisition processing.

On the other hand, when it is confirmed in S504 that the edge temperature information of the predetermined time ago is stored in the storage 14 (Yes in S504), the cooking support system 1A calculates a change from the previous temperature of the edge (S505). To be more specific, the cooking support system 1A calculates a change that is a difference between the previous temperature and the latest temperature, from the thermal image (previous temperature) of the edge before the elapse of the predetermined time and the thermal image (latest temperature) of the edge after the elapse of the predetermined time.

Thereafter, the cooking support system 1A determines whether or not the calculated change is not less than a threshold (fourth threshold) (S506). When determining that the change calculated in S505 is less than the fourth threshold (No in S506), the cooking support system 1A moves to S1 shown in Fig. 11 to start over from the thermal image acquisition processing.

On the other hand, when determining in S506 that the change calculated in S505 is not less than the fourth threshold (Yes in S506), the cooking support system 1A determines boil-over occurrence (S507). This boil-over occurrence means, as described above, that the content is to boil over the cookware 5 during cooking within a few seconds, for example. Note that the cooking support system 1A may determine that the change calculated in S505 is not less than the fourth threshold, when a temperature region having 75°C or higher appears in the thermal image at and around the position of the concerned edge (outside edge). The cooking support system 1A may also determine that the change calculated in S505 is not less than the fourth threshold, when the temperature region having 75°C or higher loses its shape (is no longer circular) in the thermal image at and around the position of the concerned edge (outside edge), depending on the material of the cookware 5.

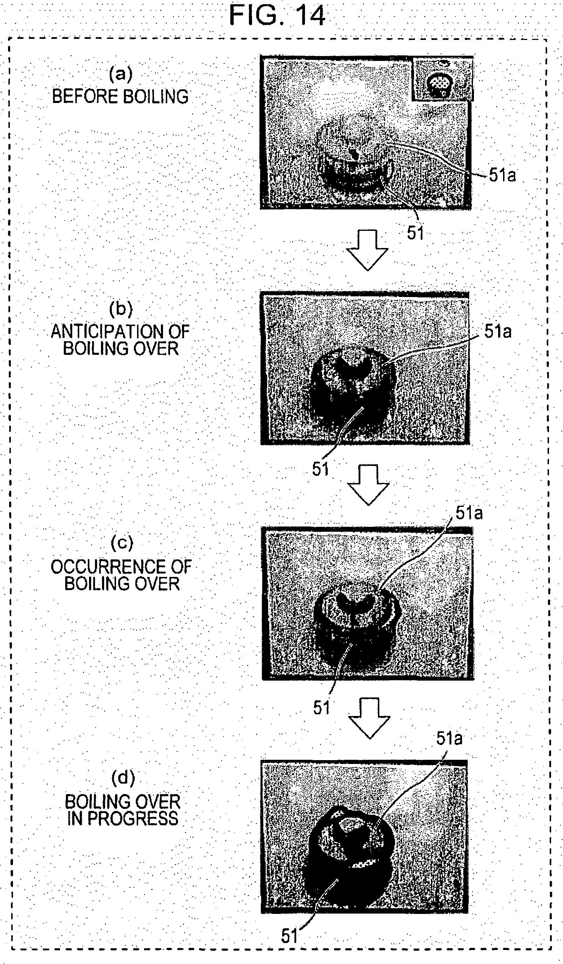

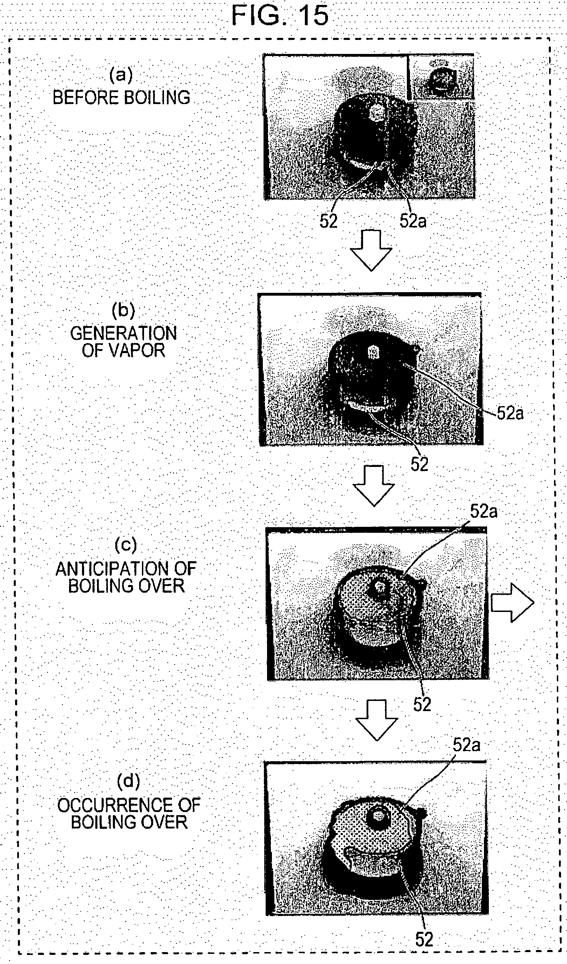

Here, with reference to Figs. 14 and 15, description is given of the reason why the determination can be made as described above.

Figs. 14 and 15 are thermal images showing an example of how boiling over occurs when the cookware has a lid on in Embodiment 2. In Figs. 14 and 15, as described above, the cookwares 51 and 52 are each an example of the cookware 5, and represent a stainless steel pot and an enamel pot, respectively. Also, the cookware 51 has a lid 51a on, and the cookware 52 has a lid 52a on.

For example, as shown in (a) of Fig. 14, no hot region having 70°C or higher appears in the thermal image when the cookware 51 has the lid 51a on before boiling. On the other hand, as shown in (b) of Fig. 14, when there is the possibility of boiling over, a hot region having 70°C or higher (hatched portion in (b) of Fig. 14) appears in a part of the vicinity of the edge (outside edge) of the lid 51a. Note that the hot region corresponds to boil-off bubbles from a gap between the cookware 51 and the lid 51a. Thereafter, as shown in (c) and (d) of Fig. 14, the hot region having 70°C or higher (hatched portion in (c) and (d) Figs. 14) in a part of the edge is gradually increased in size, and the extent of the boil-off bubbles is increased, resulting in actual boiling over. Since boiling over occurs and progresses as described above, the boil-over occurrence can be determined when a temperature region having 75°C or higher appears at and around the edge of the lid 51a.

Note that the same goes for the cookware 52 with the lid 52a on, which is an enamel pot, shown in Fig. 15. However, in the case of the enamel pot, temperature changes in the cookware 5 can be seen from the thermal images. To be more specific, as shown in (a) of Fig. 15, for example, no hot region having 70°C or higher appears in the thermal image when the cookware 51 has the lid 51a on before boiling. On the other hand, as shown in (b) Fig. 15, when vapor is generated, a part of the lid 52a is heated by the vapor inside the cookware 52, and thus a hot region having 70°C or higher (hatched portion in (b) of Fig. 15) appears in a part of the lid 52a. Then, as shown in (c) of Fig. 15, when there is the possibility of boiling over, a hot region having 70°C or higher (hatched portion in (c) of Fig. 15) appears across the lid 52a. This is because the content level in the cookware 52 rises close to the lid 52a and the content is just about to boil over. Thereafter, as shown in (d) of Fig. 15, the hot region having 70°C or higher (hatched portion in (d) of Fig. 15) across the lid 52a loses its shape, and boiling over actually occurs. Such loss of shape on the thermal image occurs because the extent of the boil-off bubbles through a gap between the cookware 52 and the lid 52a is increased to push up the lid 52a and some of the content boils over the cookware 52. Since boiling over occurs as described above, the boil-over occurrence can be determined not only when a temperature region having 75°C or higher appears at and around the position of the edge of the lid 52a but also when the region having a predetermined temperature or higher at and around the position of the concerned edge loses its shape (is no longer circular).

### [Advantageous Effects and the Like of Embodiment 2]

As described above, for the cookware 5 having low thermal conductivity, such as a stainless steel pot, boil-over determination cannot be made by detecting the content level directly from the thermal image if the cookware has the lid on. However, with the cooking support system and the cooking support method according to this embodiment, the boil-over determination can be made by detecting the hot portion in the thermal image indicating boil-off bubbles appearing on the edge (edge portion) of the lid or the loss of shape of the hot portion in the thermal image appearing across the lid. Thus, the content in the cookware 5 can be prevented from boiling over the cookware 5 by detecting occurrence thereof beforehand, regardless of the material of the cookware 5.

### (Embodiment 3)

In Embodiments 1 and 2, the description is given of the cooking support method and the cooking support system when no human is involved until boiling over from the cookware 5 occurs. However, the present disclosure is not limited thereto. In Embodiment 3, description is given of a cooking support method and a cooking support system considering a case where a user (human) engages with the cookware 5 by stirring the content or opening the lid. In the following description, description of the same points as Embodiments 1 and 2 is omitted, and differences are mainly described.

### [Configuration of Cooking Support System 1B]

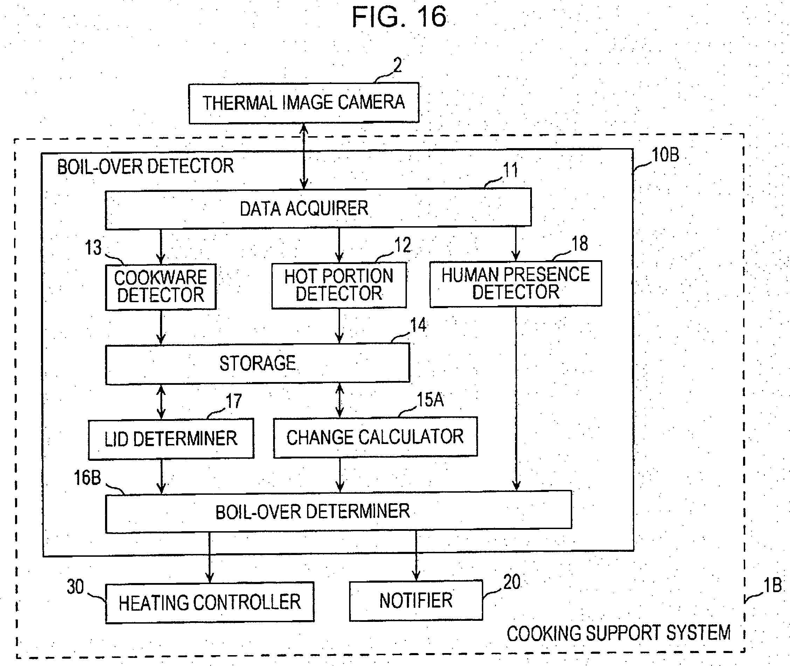

Fig. 16 is a block diagram showing a configuration example of a cooking support system 1B according to Embodiment 3. The same components as those shown in Figs. 3 and 10 are denoted by the same reference numerals, and detailed description thereof is omitted.

As shown in Fig. 16, the cooking support system 1B includes a boil-over detector 10B, a notifier 20, and a heating controller 30. The cooking support system 1B shown in Fig. 16 is different from the cooking support system 1A according to Embodiment 2 in the configuration of the boil-over detector 10B. The other configuration is the same as that of Embodiment 2, and thus description thereof is omitted here.

### [Configuration of Boil-Over Detector 10B]

As shown in Fig. 16, the boil-over detector 10B includes a data acquirer 11, a hot portion detector 12, a cookware detector 13, a storage 14, a change calculator 15A, a boil-over determiner 16B, a lid determiner 17, and a human presence detector 18. The boil-over detector 10B detects the possibility of the content boiling over the cookware 5 based on a thermal image acquired from the thermal image camera 2. To be more specific, the boil-over detector 10B shown in Fig. 16 is obtained by adding the human presence detector 18 to the boil-over detector 10A in Embodiment 2, and is different from the boil-over detector 10A in the configuration of the boil-over determiner 16B.

The human presence detector 18 checks if there is a human temperature region that is a temperature region indicating a human in a background region other than a cookware region that is a predetermined region including the cookware 5, within the concerned region of the thermal image acquired by the data acquirer 11. Thus, the human presence detector 18 detects the presence of the human in the background region of the thermal image acquired by the data acquirer 11.

The boil-over determiner 16B determines whether or not the value indicating a change in level calculated by the change calculator 15A is not less than a predetermined threshold. To be more specific, when the human presence detector 18 confirms that there is the human temperature region in the background region, the boil-over determiner 16B resets the value indicating a temperature change in the content level in the cookware 5. Note that, when the human presence detector 18 cannot confirm that there is the human temperature region in the background region, i.e., when the human presence detector 18 confirms that there is no human in the background region, the boil-over determiner 16B operates in the same manner as the boil-over determiner 16A described in Embodiment 2, and thus description thereof is omitted here.

### [Operations of Cooking Support System 1B]

Next, description is given of operations of the cooking support system 1B configured as described above.

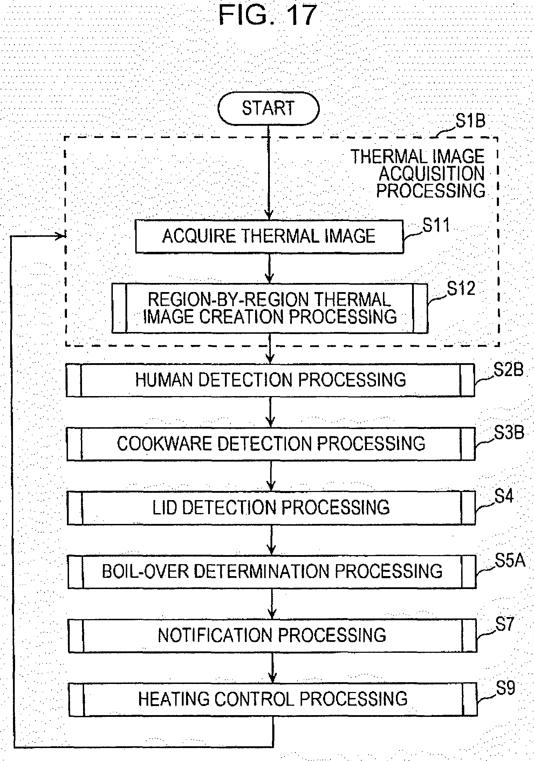

Fig. 17 is a flowchart showing an example of operations of the cooking support system 1B according to Embodiment 3. The same components as those shown in Figs. 4 and 11 are denoted by the same reference numerals, and detailed description thereof is omitted.

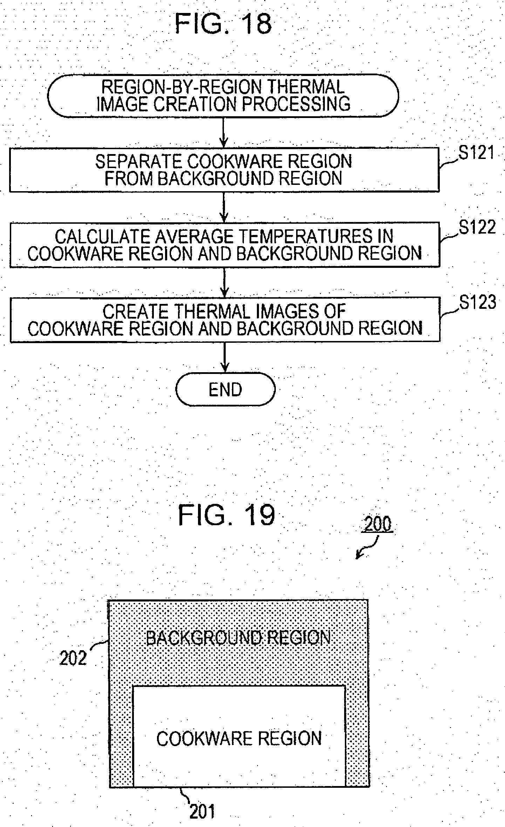

First, the cooking support system 1B performs thermal image acquisition processing (S1B). To be more specific, the cooking support system 1B acquires a thermal image of a region including the cookware 5 at predetermined time intervals from the thermal image camera 2 through the network 7 (S11) and then performs region-by-region thermal image generation processing (S12). Here, with reference to Figs. 18 and 19, the region-by-region thermal image generation processing is described in detail. Fig. 18 is a flowchart showing an example of specific operations of S12 in Fig. 17. Fig. 19 is a diagram for explaining a region-by-region thermal image generated in S12 in Fig. 17. As shown in Fig. 18, the cooking support system 1B first separates the thermal image of the region including the cookware 5 acquired at the predetermined time intervals in S11 into the cookware region that is the predetermined region including the cookware 5 and the background region other than the cookware region (S121). In the example shown in Fig. 19, the cooking support system 1B separates a thermal image 200 of the region including the cookware 5 (not shown) acquired in S11 into a cookware region 201 and a background region 202. Next, the cooking support system 1B calculates average temperatures within the cookware region and within the background region (S122). Then, the cooking support system 1B creates a thermal image of the cookware region and a thermal image of the background region (S123) Note that the processing order of S122 and S123 may be reversed.

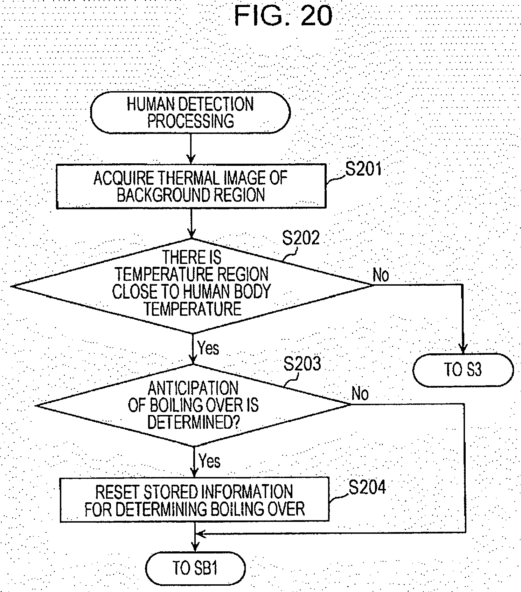

Thereafter, the cooking support system 1B performs human detection processing by using the thermal image of the background region created in S1B (S2B). Here, with reference to Fig. 20, the human detection processing is described in detail. Fig. 20 is a flowchart showing an example of specific operations of S2B in Fig. 17. As shown in Fig. 20, the cooking support system 1B first acquires the thermal image of the background region at predetermined time intervals created in S12 (S201). Next, the cooking support system 1B checks if there is a temperature region indicating a human, which is a temperature region close to a human body temperature, in the acquired thermal image of the background region (S202).

When there is no temperature region indicating a human in the acquired thermal image of the background region in S202 (No in S202), the cooking support system 1B moves to processing in S3. On the other hand, when it is confirmed that there is the temperature region indicating a human in the acquired thermal image of the background region in S202 (Yes in S202), the cooking support system 1B further checks if determination of boil-over anticipation has been made (S203).

When it is confirmed in S203 that no determination of boil-over anticipation has been made (No in S203), the cooking support system 1B returns to S1B to perform the thermal image acquisition processing. On the other hand, when it is confirmed in S203 that the determination of boil-over anticipation has been made (Yes in S203), the cooking support system 1B resets the information to be used for boil-over determination (S204) and then returns to S1B to perform the thermal image acquisition processing again. In this embodiment, in S204, the cooking support system 1B resets the value indicating the temperature change in the content level in the cookware 5 stored in the storage 14. When a thermal image of a hot portion acquired a predetermined time ago in the cookware 5 is stored in the storage 14, for example, as information indicating the content level in the cookware 5 detected a predetermined time ago, the thermal image of the hot portion acquired the predetermined time ago may be deleted. Also, when an increase in the content level in the cookware 5 is stored, for example, in the storage 14 as the value indicating the temperature change in the content level in the cookware 5, the increase may be set to 0. Moreover, when the edge temperature information (thermal image) acquired a predetermined time ago is stored, in the storage 14 as the value indicating the temperature change in the content level in the cookware 5, the edge temperature information acquired the predetermined time ago may be deleted.

Hereinafter, further description is given referring back to Fig. 17.

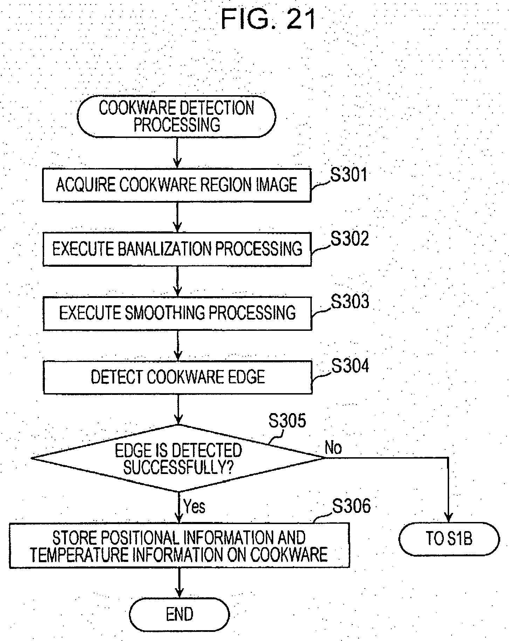

Next, the cooking support system 1B performs cookware detection processing to detect the cookware 5 based on the thermal image of the background region created in S1B (S3B). Here, with reference to Fig. 21, the cookware detection processing in S3B is described in detail. Fig. 21 is a flowchart showing an example of specific operations of S3B in Fig. 17. As shown in Fig. 21, the cooking support system 1B first acquires the thermal image of the cookware region created in S1B (S301). Next, the cooking support system 1B performs binarization processing (S301) and then smoothing processing (S302) on the thermal image of the cookware region acquired in S301. Note that the processing of S301 and S302 is the same as S31 and S32 in Fig. 5 described in Embodiment 1. Moreover, the processing of S303 to S306 is the same as S33 to S36 in Fig. 5 described in Embodiment 1, and thus description thereof is omitted here.

Then, the cooking support system 1B performs lid detection processing on the cookware 5 based on the thermal image of the cookware region created in S1B (S4). Since the processing of S4 to S9 is as described in Embodiment 2, description thereof is omitted.

### [Advantageous Effects and the Like of Embodiment 2]

As described above, the cooking support system and the cooking support method according to this embodiment can prevent the content from boiling over the cookware 5 by detecting occurrence thereof beforehand, regardless of the material of the cookware 5, considering the case where the user (human) engages with the cookware 5 by stirring the content or opening the lid.

Note that, in the above embodiment, the description is given of the case where the predetermined region including the cookware 5 in the thermal image taken by the thermal image camera 2 is set as the cookware region and the region other than the cookware region is set as the background region. However, the present disclosure is not limited thereto. As for the background region, a region indicating the cooking heater 3 in the thermal image may be set as the cookware region and a region other than the region indicating the cooking heater 3 may be set as the background region.

The cooking support method and the cooking support system according to one or more aspects of the present disclosure have been described above based on the embodiments. However, the present disclosure is not limited to those embodiments. Embodiments obtained by applying various modifications conceived by those skilled in the art to the above embodiments and embodiments configured by combining constituent elements in different embodiments may be included within the scope of one or more aspects of the present disclosure without departing from the spirit of the present disclosure. For example, the following cases are also included in the present disclosure.
(1) In Embodiments 1 to 3 described above, the description is given of the case where the cooking support system and the cooking support method determines the possibility of boiling over by acquiring the thermal image of the region including the cookware 5 at the predetermined time intervals from the thermal image camera 2. However, the present disclosure is not limited thereto.
   For example, when the content in the cookware 5 starts boiling, the possibility of boiling over may be determined by acquiring thermal images of the region including the cookware 5 at time intervals shorter than the predetermined time described above. Thus, the accuracy of determining the boil-over occurrence can be further improved.
(2) It is also conceivable that a pattern of a temperature change in content or of a change in content level may vary depending on the kind or material of the cookware 5. Therefore, the possibility of boiling over may be determined by using learning data obtained by previously learning the correspondence between change patterns of the temperature and level of the content in the cookware 5 and the heating state of the cookware 5. Particularly, when the cookware 5 has the lid on, the size and movement of bubbles adhering to the edge of the lid are not uniform immediately before the occurrence of boiling over. Therefore, improvement in the accuracy of determining the boil-over occurrence can be expected by previously learning the correspondence between change patterns of the temperature and level of the content in the cookware 5 and the heating state of the cookware 5.
   Note that the learning data may be stored in a specific local device disposed in the cooking support system. Alternatively, the learning data may be acquired from a cloud server or the like disposed in a location different from the local device.
   Moreover, it is also conceivable that, in the case of using the learning data, the possibility of boiling over can be determined by using not only the thermal image but also a normal image. This is because the correspondence between change patterns of the temperature and level of the content in the cookware 5 and the heating state of the cookware 5 in the normal image can be previously learned.
(3) Each of the devices described above is a computer system including a microprocessor, a ROM, a RAM, a hard disk unit, a display unit, a keyboard, a mouse, and the like. The RAM or the hard disk unit stores computer programs. The microprocessor operates according to the computer program, thereby allowing each of the devices to accomplish its functions. The computer program herein includes a combination of multiple command codes indicating instructions to a computer in order to accomplish predetermined functions.
(4) Some of or all of the constituent components included in the devices described above may be achieved by a single system LSI (Large Scale Integration) circuit. The system LSI circuit is a super-multifunctional LSI circuit fabricated by integrating a plurality of components on a single chip and, more specifically, a computer system including a microprocessor, a ROM, a RAM, and the like. The RAM stores a computer program. When the microprocessor operates in accordance with the computer program, the system LSI circuit achieves functions thereof.
(5) Some of or all of the constituent components included in the devices described above may be achieved by an IC card removably attached to each device or a separate module. The IC card or the module is a computer system including a microprocessor, a ROM, a RAM, and the like. The IC card or the module may include the super-multifunctional LSI circuit described above. When the microprocessor operates in accordance with the computer program, the IC card or the module achieves functions thereof. The IC card or the module may be tamper-resistant.
(6) The present disclosure may be the methods described above. Alternatively, the present disclosure may be a computer program with which a computer achieves these methods, or a digital signal including the computer program.
   Alternatively, the present disclosure may be a computer-readable recording medium, namely, for example, a flexible disk, a hard disk, a CD-ROM, an MO, a DVD, a DVD-ROM, a DVD-RAM,a BD (Blu-ray (registered trademark) Disc), or a semiconductor memory, storing the computer program or the digital signal. Alternatively, the present disclosure may be the digital signal recorded on one of these recording media.
   Alternatively, the present disclosure may be the computer program or the digital signal transmitted through an electrical communication line, a wireless or wired communication line, a network typified by the Internet, datacasting, or the like.
   Alternatively, the present disclosure may be a computer system including a microprocessor and a memory. The memory may store the computer program, and the microprocessor may operate in accordance with the computer program.
   Alternatively, the present disclosure may be implemented by an independent computer system using the computer program or the digital signal transported in one of the recording media or through the network or the like.
(7) The above embodiments may be combined with one another.

The present disclosure is applicable to a cooking support method and a cooking support system for detecting and preventing boiling over during cooking with a cookware such as a pot, and is particularly applicable to a cooking support method and a cooking support system used for a cooking heater such as an IH cooking heater and a stove capable of externally controlling gas and fire.

## Claims

1. A cooking support method for a cooking support system (1) which is connected through a network (7) to a thermal image camera (2) to take a thermal image (200) of a region including a cookware (5) during cooking and to a notification device (6) capable of notifying the user of information, and which supports cooking by a user, comprising:
acquiring (S1, S11), through the network (7) from the thermal image camera (2), a thermal image (200) of the region including the cookware (5) at predetermined time intervals taken from the obliquely above the cookware (5) by the thermal image camera (2);**characterized in that**
calculating (S54) a value indicating a change in level of a content in the cookware (5) from the acquired thermal image (200);
determining (S56) whether or not the calculated value indicating the change in level is not less than a predetermined threshold;
determining (S59) that there is a possibility of the content boiling over the cookware (5) during cooking when it is determined (S56) that the calculated value indicating the change in level is not less than the predetermined threshold; and
transmitting (S96) notification information to the notification device (6), the notification information indicating information notifying the user that there is the possibility of boiling over.

2. The cooking support method according to Claim 1, wherein
the cooking support system (1) is further connected through the network (7) to a cooking heater (3) that enables cooking with the cookware (5),
the cooking support method further comprising:
cookware (5) at the predetermined time intervals, as the value of the temperature change in the outside edge.

3. The cooking support method according to Claim 2, wherein
the control signal indicates an instruction to stop (S92) a cooking operation by the cooking heater (3).

4. The cooking support method according to Claim 1, further comprising:
calculating (S54) a value indicating a change in area of a predetermined temperature region that is a region having a predetermined temperature or higher in the thermal image (200) of the cookware (5) acquired at the predetermined time intervals, as the value indicating the change in level.

5. The cooking support method according to Claim 1, further comprising:
determining (S4) whether or not there is a lid on the cookware (5) during cooking based on the thermal image (200);
when it is determined (S46) that there is no lid, determining whether or not the value indicating the change in level is not less than the predetermined threshold; and
when it is determined (S47) that there is the lid, detecting (S304) an outside edge of the lid of the cookware (5) based on the thermal image (200), calculating (S54) a value of a temperature change in the outside edge as the value indicating the change in level, and determining (S56) whether or not the value of the temperature change in the outside edge is not less than a predetermined threshold.

6. The cooking support method according to Claim 5, further comprising:
calculating (S54) a value indicating a change in area of a region having a predetermined temperature or higher at and around the outside edge in the thermal image (200) of the a change calculator (15) configured to calculate (S54) a value indicating a change in level of a content in the cookware (5) from the acquired thermal image (200);
a boil-over determiner (16) configured to determine (S56) whether or not the calculated value indicating the change in level is not less than a predetermined threshold, and to determine (S59) that there is a possibility of the content boiling over the cookware (5) during cooking when it is determined (S56) that the calculated value indicating the change in level is not less than the predetermined threshold; and
a notifier (20) configured to transmit notification information indicating information notifying the user that there is a possibility of boiling over to the notification device (6) when the boil-over determiner (16) determines that there is the possibility of the content boiling over.

7. The cooking support method according to Claim 1, further comprising:
checking (S2B) if the region of the acquired thermal image (200) includes a human temperature region that is a temperature region indicating a human in a background region (202) other than a cookware region (201) that is a specific region including the cookware (5); and
resetting (S204) the value indicating the change in level when it is confirmed that there is the human temperature region in the background region (202).

8. The cooking support method according to Claim 1, wherein
the notification device (6) is portable by the user and includes a display viewable by the user, and
the cooking support method further comprising:
transmitting the notification information through an e-mail to the notification device (6) when it is determined (S56) that the calculated value indicating the change in level is not less than the predetermined threshold.

9. A cooking support system (1) which is connected through a network (7) to a thermal image camera (2) to take a thermal image (200) of a region including a cookware (5) during cooking and to a notification device (6) capable of notifying the user of information, and which supports cooking by a user, comprising:
a data acquirer (11) configured to acquire (S1, S11), through the network (7) from the thermal image camera (2), a thermal image (200) of the region including the cookware (5) at predetermined time intervals taken from the obliquely above the cookware (5) by the thermal image camera (2);
**characterized by**
transmitting (S95) a control signal indicating an instruction to lower an output of the cooking heater (3) to the cooking heater (3) when it is determined (S56) that the calculated value indicating the change in level is not less than the predetermined threshold.

## Patentansprüche

1. Ein Kochunterstützungsverfahren für ein Kochunterstützungssystem (1), welches über ein Netzwerk (7) mit einer Wärmebildkamera (2) zum Aufnehmen eines Wärmebildes (200) eines Bereichs, der ein Kochgerät (5) beim Kochen beinhaltet, und mit einem Benachrichtigungsgerät (6), das in der Lage ist, dem Nutzer Informationen mitzuteilen, verbunden ist und welches Kochen eines Benutzers unterstützt, umfassend:
Erwerben (S1, S11) eines Wärmebildes (200) des Bereichs, der das Kochgerät (5) beinhaltet, welches von schräg oberhalb des Kochgeräts (5) durch die Wärmebildkamera (2) in vorbestimmten Zeitintervallen aufgenommen wurde, über das Netzwerk (7) von der Wärmebildkamera (2); **gekennzeichnet dadurch, dass**
Berechnen (S54) eines Wertes von dem erworbenen Wärmebild (200), der eine Höhenänderung eines Inhalts in dem Kochgerät (5) anzeigt;
Bestimmen (S56) ob der berechnete Wert, der die Höhenänderung anzeigt, nicht kleiner als ein vorbestimmter Schwellwert ist;
Bestimmen (S59), dass eine Möglichkeit besteht, dass der Inhalt während des Kochens über das Kochgerät (5) kocht, wenn bestimmt wird (S56), dass der berechnete Wert, der die Höhenänderung anzeigt, nicht kleiner als der vorbestimmte Schwellwert ist; und
Übertragen (S96) von Benachrichtigungsinformation an das Benachrichtigungsgerät (6), wobei die Benachrichtigungsinformation den Benutzer verständigt, dass die Möglichkeit des Überkochens besteht.

2. Das Kochunterstützungsverfahren gemäß Anspruch 1, wobei
das Kochunterstützungssystem (1) des Weiteren über das Netzwerk (7) mit einem Kochheizer (3) verbunden ist, der Kochen mit dem Kochgerät (5) ermöglicht,
wobei das Kochunterstützungsverfahren des Weiteren umfasst:
Übertragen (S95) eines Steuerungssignals, das dem Kochheizer (3) eine Anweisung anzeigt, eine Leistung des Kochheizers (3) zu reduzieren, wenn bestimmt wird (S56), dass der berechnete Wert, der die Höhenänderung anzeigt, nicht kleiner als der vorbestimmte Schwellwert ist.

3. Das Kochunterstützungsverfahren gemäß Anspruch 2, wobei
das Steuerungssignal eine Anweisung anzeigt, einen Kochvorgang des Kochheizers (3) zu stoppen (S92).

4. Das Kochunterstützungsverfahren gemäß Anspruch 1, des Weiteren umfassend:
Berechnen (S54) eines Wertes, der eine Flächenänderung eines Bereichs vorbestimmter Temperatur anzeigt, welches ein Bereich ist, der eine vorbestimmte Temperatur oder höher in dem Wärmebild (200) des Kochgeräts (5) hat, das in den vorbestimmten Zeitintervallen erworben wurde, für den Wert, der die Höhenänderung anzeigt.

5. Das Kochunterstützungsverfahren gemäß Anspruch 1, des Weiteren umfassend:
Bestimmen (S4), basierend auf dem Wärmebild (200), ob es einen Deckel während des Kochens auf dem Kochgerät (5) gibt;
wenn bestimmt wird (S46), dass es keinen Deckel gibt, Bestimmen ob der Wert, der die Höhenänderung anzeigt, nicht kleiner als der vorbestimmte Schwellwert ist; und
wenn bestimmt wird (S47), dass es den Deckel gibt, Erkennen (S304) eines äußeren Randes des Deckels des Kochgeräts (5) basierend auf dem Wärmebild (200), Berechnen (S54) eines Wertes einer Temperaturänderung in dem äußeren Rand für den Wert, der die Höhenänderung anzeigt, und Bestimmen (S56) ob der Wert der Temperaturänderung in dem äußeren Rand nicht kleiner als ein vorbestimmte Schwellwert ist.

6. Das Kochunterstützungsverfahren gemäß Anspruch 5, des Weiteren umfassend:
Berechnen (S54) eines Wertes, der eine Flächenänderung eines Bereichs anzeigt, der eine vorbestimmte Temperatur oder höher am und um den äußeren Rand in dem Wärmebild (200) des Kochgeräts (5) hat, das in den vorbestimmten Zeitintervallen erworben wurde, für den Wert der Temperaturänderung an dem äußeren Rand.

7. Das Kochunterstützungsverfahren gemäß Anspruch 1, des Weiteren umfassend:
Überprüfen (S2B) ob der Bereich des erworbenen Wärmebildes (200) einen Bereich menschlicher Temperatur beinhaltet, welcher ein Temperaturbereich ist, der auf einen Menschen in einem Hintergrundbereich (202) hindeutet, und sich von dem Kochgerätbereich (201), welcher ein bestimmter Bereich ist, der das Kochgerät (5) beinhaltet, unterscheidet; und
Zurücksetzen (S204) des Wertes, der die Höhenänderung anzeigt, wenn bestätigt wird, dass es einen menschlichen Temperaturbereich in dem Hintergrundbereich (202) gibt.

8. Das Kochunterstützungsverfahren gemäß Anspruch 1, wobei
das Benachrichtigungsgerät (6) von dem Benutzer tragbar ist und eine durch den Benutzer anschaubare Anzeige beinhaltet, und
das Kochunterstützungsverfahren des Weiteren umfasst:
Übertragen der Benachrichtigungsinformation zu dem Benachrichtigungsgerät (6) durch eine E-Mail, wenn bestimmt wird (S56), dass der berechnete Wert, der die Höhenänderung anzeigt, nicht kleiner als der vorbestimmte Schwellwert ist.

9. Ein Kochunterstützungssystem (1), welches über ein Netzwerk (7) mit einer Wärmebildkamera (2) zum Aufnehmen eines Wärmebildes (200) eines Bereichs, der ein Kochgerät (5) beim Kochen beinhaltet, und mit einem Benachrichtigungsgerät (6), das in der Lage ist, dem Nutzer Informationen mitzuteilen, verbunden ist und welches Kochen eines Benutzers unterstützt, umfassend:
einen Datenerwerber (11), der konfiguriert ist ein Wärmebild (200) des Bereichs, der das Kochgerät (5) beinhaltet, welches von schräg oberhalb des Kochgeräts (5) durch die Wärmebildkamera (2) in vorbestimmten Zeitintervallen aufgenommen wurde, über das Netzwerk (7) von der Wärmebildkamera (2) zu erwerben (S1, S11);
**gekennzeichnet durch**
einen Änderungsberechner (15), der konfiguriert ist einen Wert von dem erworbenen Wärmebild (200) zu berechnen (S54), der eine Höhenänderung eines Inhalts in dem Kochgerät (5) anzeigt;
einen Überkoch-Bestimmer, der konfiguriert ist zu bestimmen (S56) ob der berechnete Wert, der die Höhenänderung anzeigt, nicht kleiner als ein vorbestimmter Schwellwert ist, und zu bestimmen (S59), dass eine Möglichkeit besteht, dass der Inhalt während des Kochens über das Kochgerät (5) kocht, wenn bestimmt wird (S56), dass der berechnete Wert, der die Höhenänderung anzeigt, nicht kleiner als der vorbestimmte Schwellwert ist; und
einen Benachrichtiger (20), der konfiguriert ist Benachrichtigungsinformation an das Benachrichtigungsgerät (6) zu übertragen (S96), wobei die Benachrichtigungsinformation den Benutzer verständigt, dass die Möglichkeit des Überkochens besteht.

## Revendications

1. Procédé d'aide à la cuisson pour un système d'aide à la cuisson (1) qui est connecté par l'intermédiaire d'un réseau (7) à une caméra d'image thermique (2) pour prendre une image thermique (200) d'une zone comprenant une ustensile de cuisson (5) pendant la cuisson et à un dispositif de notification (6) capable de notifier l'utilisateur des informations, et qui aide la cuisson initiée par un utilisateur, comprenant:
l'acquisition (S1, S11), par l'intermédiaire du réseau (7) de la caméra d'image thermique (2), d'une image thermique (200) de la zone comprenant l'ustensile de cuisson (5) à des intervalles de temps prédéterminés, prise par la caméra d'image thermique (2) au-dessus de l'ustensile de cuisson (5), de manière oblique, par celle-ci;
**caractérisé par** les opérations suivantes
calculer (S54) une valeur indiquant un changement de niveau d'un contenu de l'ustensile de cuisson (5) à partir de l'image thermique acquise (200);
déterminer (S56) si la valeur calculée indiquant le changement de niveau n'est pas inférieure ou non à un seuil prédéterminé;
déterminer (S59) qu'il y a une possibilité que le contenu déborde de l'ustensile de cuisson (5) par ébullition pendant la cuisson lorsque l'on détermine (S56) que la valeur calculée indiquant le changement de niveau n'est pas inférieure au seuil prédéterminé; et
transmettre des informations de notification (S96) au dispositif de notification (6), les informations de notification contenant des informations informant l'utilisateur qu'il existe un risque de débordement.

2. Procédé d'aide à la cuisson selon la revendication 1, dans lequel
le système d'aide à la cuisson (1) est en outre connecté par l'intermédiaire du réseau (7) à un élément chauffant de cuisson (3) qui permet de cuire avec l'ustensile de cuisson (5),
le procédé d'aide à la cuisson consistant en outre à :
transmettre (S95) un signal de commande indiquant une instruction demandant au dispositif de chauffage de cuisson (3) d'abaisser une sortie du dispositif de chauffage de cuisson (3) lorsque l'on détermine (S56) que la valeur calculée indiquant la variation du niveau n'est pas inférieure au seuil prédéterminé.

3. Procédé d'aide à la cuisson selon la revendication 2, dans lequel le signal de commande indique une instruction d'arrêt (S92) d'une opération de cuisson par l'élément chauffant de cuisson (3).

4. Procédé d'aide à la cuisson selon la revendication 1, consistant en outre à:
calculer (S54) une valeur indiquant un changement de surface d'une zone de température prédéterminée qui est une zone de température prédéterminée ou supérieure dans l'image thermique (200) de l'ustensile de cuisson (5) acquise aux intervalles de temps prédéterminés, comme valeur indiquant le changement de niveau.

5. Procédé d'aide à la cuisson selon la revendication 1, consistant en outre à:
déterminer (S4) s'il y a ou non un couvercle sur l'ustensile de cuisson (5) pendant la cuisson sur la base de l'image thermique (200);
lorsque l'on détermine (S46) qu'il n'y a pas de couvercle, déterminer si la valeur indiquant le changement de niveau n'est pas inférieure ou non au seuil prédéterminé; et
lorsque l'on détermine (S47) qu'il y a le couvercle, détecter (S304) un rebord extérieur du couvercle de l'ustensile de cuisson (5) sur la base de l'image thermique (200), calculer (S54) une valeur d'un changement de température dans le rebord extérieur comme valeur indiquant le changement de niveau, et déterminer (S56) si la valeur du changement de température du rebord extérieur est ou non inférieure à un seuil prédéterminé.

6. Procédé d'aide à la cuisson selon la revendication 5, consistant en outre à:
calculer (S54) une valeur indiquant un changement de surface d'une zone de température prédéterminée au supérieure au niveau et autour du rebord extérieur dans l'image thermique (200) de l'ustensile de cuisson (5) aux intervalles de temps prédéterminés, comme la valeur du changement de température dans le rebord extérieur.

7. Procédé d'aide à la cuisson selon la revendication 1, consistant en outre à:
vérifier (S2B) si la zone de l'image thermique acquise (200) comprend une zone de température humaine qui est une zone de température indiquant la présence d'un être humain dans une zone d'arrière-plan (202) autre qu'une zone d'ustensile de cuisson (201) qui est une zone spécifique incluant l'ustensile de cuisson (5); et
réinitialiser (S204) la valeur indiquant le changement de niveau si la présence d'un être humain est confirmé par la zone de température humaine dans la zone d'arrière-plan (202).

8. Procédé d'aide à la cuisson selon la revendication 1, dans lequel
le dispositif de notification (6) est portable par l'utilisateur et comprend un affichage visible par l'utilisateur, et
le procédé d'aide à la cuisson consistant en outre à:
transmettre les informations de notification par courrier électronique au dispositif de notification (6) lorsque l'on détermine (S56) que la valeur calculée indiquant le changement de niveau n'est pas inférieure au seuil prédéterminé.

9. Système d'aide à la cuisson (1) qui est connecté par l'intermédiaire d'un réseau (7) à une caméra d'image thermique (2) pour prendre une image thermique (200) d'une zone comprenant un ustensile de cuisson (5) pendant la cuisson et à un dispositif de notification (6) capable d'informer l'utilisateur des informations, et
qui surveille la cuisson initiée par un utilisateur, comprenant:
un dispositif d'acquisition de données (11) configuré pour acquérir (S1, S11), par l'intermédiaire du réseau (7), à partir de la caméra d'image thermique (2), une image thermique (200) de la zone comprenant l'ustensile de cuisson (5) à des intervalles de temps prédéterminés, prise par la caméra d'image thermique (2) au-dessus de la batterie de cuisine (5), de manière oblique, par celle-ci;
**caractérisé par**
une calculatrice de changement (15) configurée pour calculer (S54) une valeur indiquant un changement de niveau d'un contenu de l'ustensile de cuisson (5) à partir de l'image thermique acquise (200);
un dispositif de détermination du point d'ébullition (16) configuré pour déterminer (S56) si la valeur calculée indiquant le changement de niveau n'est pas inférieure à un seuil prédéterminé, et pour déterminer (S59) qu'il existe une possibilité que le contenu déborde de l'ustensile de cuisson (5) par ébullition pendant la cuisson si l'on détermine (S56) que la valeur calculée indiquant le changement de niveau n'est pas inférieure à ce seuil prédéterminé; et
un dispositif de notification (20) configuré pour transmettre au dispositif de notification (6), des informations de notification contenant des informations indiquant qu'il existe un risque de débordement lorsque le dispositif de détermination du point d'ébullition (16) détermine qu'il existe un risque que le contenu déborde.
